# EUROPEAN PATENT SPECIFICATION

(11) **EP 1 544 509 B1**
(45) Date of publication and mention of the grant of the patent: **17.02.2010**
(21) Application number: 04078309.4
(22) Date of filing: 06.12.2004
(51) Int. Cl.: F16H 25/16, D03D 47/27, D03C 5/02, D04B 27/08

(54) **Driving device**
Antriebvorrichtung
Dispositif d'entraînement

(30) Priority: 16.12.2003 BE 200300661
(43) Date of publication of application: 22.06.2005
(73) Proprietor: N.V. Michel Van de Wiele, B-8510 Kortrijk (Marke) (BE)
(72) Inventor: Debaes, Johny, 8890 Moorslede (BE); Dejaegere, Ferdi, 8890 Dadizele (BE)
(74) Representative: Ostyn, Frans

(56) References cited:
- EP-A- 0 293 965
- DD-A- 261 935
- FR-A- 2 317 139
- GB-A- 639 771
- US-A- 5 351 723

## Description

The present invention relates to a driving device, comprising at least one body, which may be put in an alternating rotary motion by the rotation of at least one cam.

More particularly, this invention relates to such a driving device, the said body of which has been designed to actuate an element to be driven by its alternating rotary motion. The motion of the element to be driven, may be any motion such as, for instance, an alternating motion or an oscillating motion along a straight or curved line, or a combination or succession of different motions.

Furthermore, this invention also relates to a machine comprising a driving device according to this invention, and more particularly to a machine comprising a driving device, at least one body of which may be put in an alternating motion by the rotation of at least one cam in order to drive a machine part connected to that body. More particularly this invention relates to a textile machine, such as, for instance, a weaving machine or a Jacquard machine or a knitting machine.

Textile machines are comprising quite a number of parts, which have to move in an oscillating alternating motion. Thus, the weaving reed has to move alternately to beat up the weft yarn,: and the rapiers of a rapier weaving machine have to be put in an alternating motion in order to insert the weft yarn into the shed. Likewise, when driving the knives of a Jacquard machine by means of oscillating swing levers, for driving the weaving frames of a weaving machine through eccentrics and a lever mechanism, and when forming the shed for the selvedge on the weaving machine, alternating motions have to be realized. It is known therefore, that a body is made to perform an alternating motion by means of a cam mechanism and to transfer this motion of the body to a part to be driven.

The known driving devices comprise a cam mechanism, the cams of which are provided on a drive shaft and to a cam follower lever with lever arms equipped with a traveller roller. Each traveller roller is designed to run along the circumferential edge of a cam. The cam has such a form that the follower lever is made to perform an alternating rotary motion. This motion is transferred to the part of the machine to be driven by means of a lever mechanism.

The cam mechanism may comprise one single disc cam, the lever arm being pressed against the circumferential edge by means of a spring. However, the cam mechanism may comprise a pair of conjugated cams, the two lever arms of the same cam follower levers each are operating in conjunction with a respective cam of the pair, so that the cam follower lever is forced to perform a controlled alternating motion, because of the shape of the conjugated cams and their position with respect to one another.

With these driving devices, the cam follower lever performs a alternating rotary motion around its axis. Therefore, the bearing system of the cam follower lever is subjected to an irregular load and wear. When dip lubrication is applied, only a completely submerged bearing will guarantee adequate lubrication. Moreover, in these driving devices, a rather long kinematic chain is formed from the drive shaft to the part, which is driven, via the cams, the cam follower lever and the lever mechanism. Because of which, the device will require quite some space and will cause a harmful accumulation of clearance and uncertainty of position.

FR 2 317 139 discloses a driving device which has the above-mentioned drawbacks. Additional drawbacks are the great moment of inertia of the continuously rotating shaft, and the fact that this device is not suitable for being subjected to rather heavy loads.

It is one of the purposes of the present invention to provide a driving device comprising at least one body, which may be made to perform an alternating rotary motion by means of at least one rotating cam and by means of which it will be possible to remedy the above-mentioned disadvantages.

This purpose is attained by providing such a driving device, the said body of which is provided to be rotatable on a shaft, which, itself, is designed to perform a continuous rotary motion.

Because the shaft itself, on which the body performs its alternating rotary motion, is likewise performing a continuous rotary motion with complete rotations, the bearing arrangement of this body will be subjected to a uniform load along its circumference and consequently it will be subjected to a uniform wear. This will increase the life of the bearing. By the rotation of the shaft on which the body has been provided, the building up of an oil film will be likewise ensured, so that, in case the bearing has a dip lubrication, lubrication will be ensured also when the bearing will not be completely immersed.

As the alternating rotary motion of the body is received in the kinematic chain at a shorter distance, the kinematic chain being closed near the body, the driving device according to this invention may be designed to be more compact than the driving devices known and, at the same time, it will be particularly advantageous as to precision and to reduce vibrations.

In a preferred embodiment, the device according to this invention comprises a drive shaft to rotate the cam, and the said body is mounted on bearings on the drive shaft or on a shaft that may be driven by the drive shaft. Preferably the body being supported coaxially.

When the body is supported by bearings on the drive shaft, this drive shaft will be reinforced, so that the diameter of this drive shaft may be reduced. Together with the fact that no separate shaft to receive the body is needed, this means a considerable saving of expenses and both inertia and energy consumption will be reduced.

The body may be carried out with two first lever arms, which are designed to operate in conjunction with a respective cam of a pair of conjugated cams, in order to make the body perform an alternating rotary motion.

Preferably, the body also comprises at least one second lever arm in order to transmit the alternating rotary motion to a part to be driven.

In a particular embodiment, the device according to the present invention is comprising transmission means to transmit the motion of the said shaft to the said cam. These transmission means may consist, for instance, of two gear wheels operating in conjunction, one of which is provided on the drive shaft and the other gear wheel being provided on the shaft of the cams.

In a particularly advantageous embodiment, a transmission means is provided on the said shaft such as, for instance, a gear wheel and the body is comprising two first lever arms, designed to operate in conjunction with a respective cam of a pair of conjugated cams, and the body is designed such that there is a first lever arm situated on both sides of the said transmission means. Therefore the conjugated cams are situated on either side of a transmission means provided on the camshaft. Because of this, a more symmetrical load on the cam shaft will be obtained.

In another particular embodiment of the device according to the present invention, a transmission means, such as, for instance, a gear wheel is provided on the said shaft, and the body is rotatable on the said shaft by means of two bearings provided on the shaft on either side of the transmission means. This arrangement will produce a better distribution of the load on the said shaft.

Another preferred embodiment of the driving device according to the present invention, preferably comprises at least two bodies, which may be put in an alternating rotary motion, whereas the cams operating in conjunction with these bodies are provided on a same camshaft. In this embodiment, preferably all cams provided on this camshaft may be driven by one and the same transmission mechanism. Because of which the number of components will be limited.

In such a device, comprising at least two bodies, the said shaft is also equipped with, for instance, a transmission means (a gear wheel, for instance) and a body is provided on the said shaft on either side of the transmission means.

In such a driving device, comprising at least two bodies, the cams operating in conjunction with these bodies may also be provided on different shafts.

In a very preferred embodiment of the driving device according to the present invention, it comprises two conjugated cam systems at a distance from one another in the longitudinal direction of the drive shaft, on respective camshafts, as well as at least two bodies which may be put in an alternating rotary motion by a cam of one of the cam systems and a conjugated cam of the other cam system.

In this embodiment, two oscillating alternating motions may be realized in a machine in two different locations by means of only two bodies put in an alternating rotary motion by two conjugated cam systems. In the devices known, twice as many bodies and cam systems are required to that effect. It is possible, for instance, to realize two oscillating alternating motions on either side of a machine, if the bodies are carried out such that they extend across the width of the machine. This will result in a considerable saving of expenses because the number of components is restricted.

In the driving device according to the present invention, the said body preferably is a cam follower lever or a lever driven by a cam follower lever.

In the device according to the present invention the said cam is, for instance, a cam disc or a three-dimensional cam, such as a globoidal cam.

Furthermore, the present invention also relates to a textile machine, at least one body of which may be put in a alternating rotary motion by means of the rotation of at least one cam, in order to transmit this motion to a part connected to the body, the said body being provided to be rotatable on a shaft, which itself is provided to perform a continuous rotary motion.

To that effect, this textile machine preferably comprises a drive shaft to rotate the cam, whereas the said body is supported by bearings on the drive shaft or on a shaft that may be driven by the drive shaft.

Also a textile machine comprising a device with one or several of the characteristics indicated before, will be within the scope of the present invention. Preferably, the textile machine according to the present invention, is a weaving machine, a Jacquard machine or a knitting machine.

In the following detailed description of a number of embodiments of the driving device according to the present invention, the above-mentioned characteristics and advantages of the invention are further clarified. The intention of this description is only to clarify the general principles of the present invention, so that nothing in this description may be interpreted as being a restriction of the field of application of the invention or of the patent rights demanded for in the claims.

In this description, by means of reference numbers, reference is made to the attached figure 1 to 9, which in a rather schematic way, are representing a number of different embodiments of a driving device to realize an oscillating motion of a part of a textile machine, of which:
- figures 1 and 2 respectively are representing a cross-section and a side view of a first embodiment of the driving device;
- figures 3 and 4 respectively are representing a cross-section and a side view in perspective of a second embodiment of the driving device;
- figure 5 is representing a side view in perspective of a third embodiment of the driving device;
- figures 6 to 9 are representing cross-sections of a fourth, fifth, sixth and seventh embodiment of the driving device.

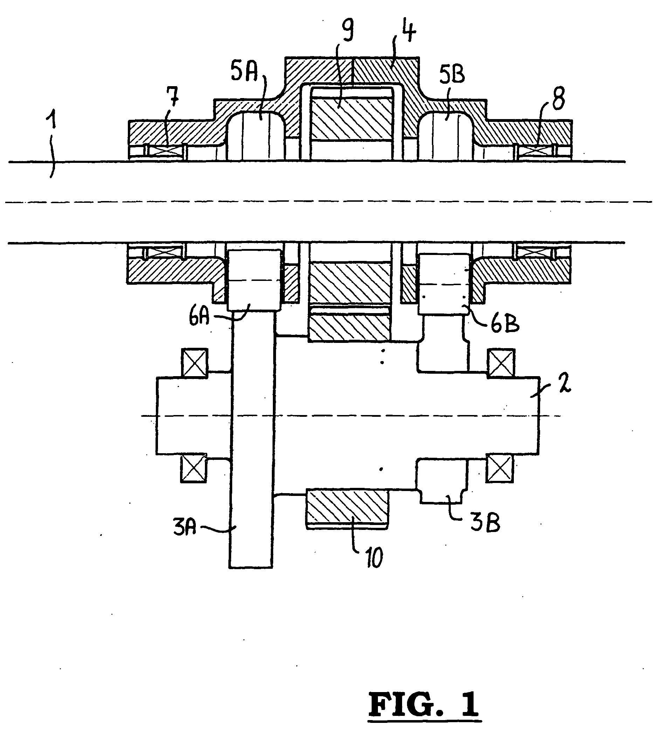

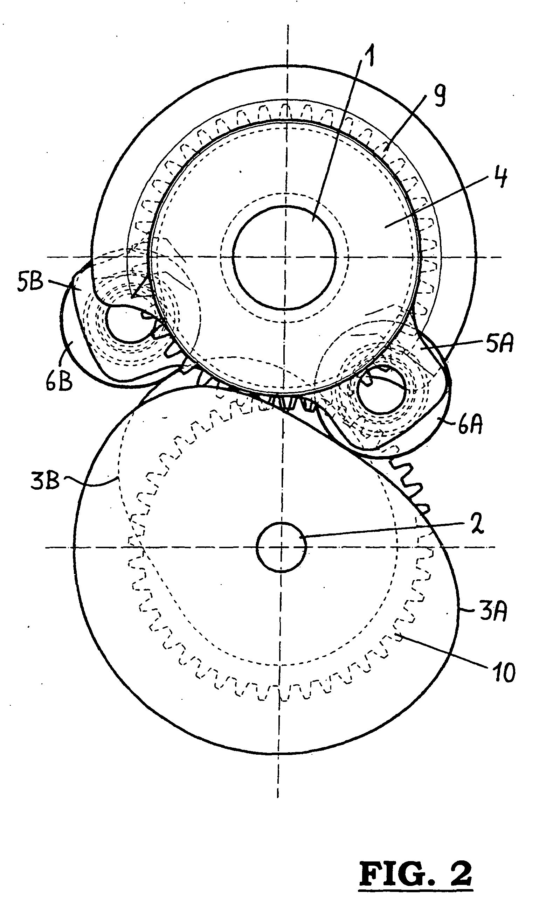

A first embodiment of the driving device according the present invention is represented in figures 1 and 2. This driving device comprises a drive shaft (1) and a camshaft (2). The drive shaft (1) and the camshaft (2) respectively are provided with meshing gear wheels (9), (10). On the camshaft (2), two additional cam discs (3A), (3B) are provided, on either side of the gear wheel (10) provided on the camshaft (2) respectively.

On the drive shaft (1), a cam follower lever (4) is provided, which is coaxially supported on the drive shaft (1) by means of two bearings (7), (8). The bearings (7), (8) are situated on the drive shaft (1) on either side of the gear wheel (9). The cam follower lever (4) has two first lever arms (5A), (5B), at their extremities provided with respective traveller rollers (6A), (6B) which are designed to run along the circumferential edge of a respective cam disc (3A), (3B) when the cam discs (3A), (3B) are rotating. Which causes the cam follower lever (4) to perform an alternating rotary motion. Furthermore, the cam follower lever (4) has one or several second lever arms (not represented in the figures) in order to connect a part of the machine to be driven (not represented in the figures) to the cam follower lever (4). Because of which, this part of the machine may be driven to perform an oscillating alternating motion.

Because the cam follower lever (4) is supported by means of bearings on the drive shaft (1), performing a continuous rotary motion, the bearings (7), (8) are also rotating continuously with full rotations. Because of which, the bearings will be subjected to a uniform load along their circumference, which means that they are likewise subjected to a uniform wear. Because of the continuous rotation of the bearings (7), (8) an oil film will always be provided.

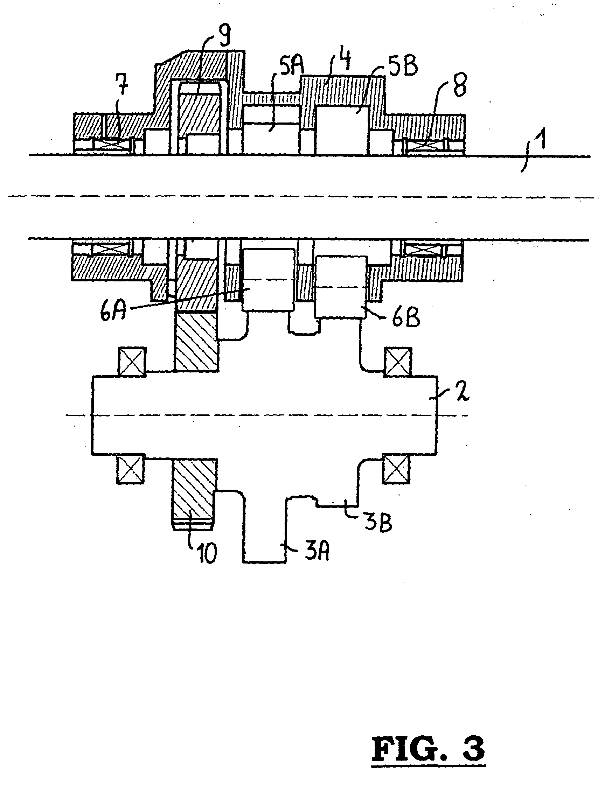

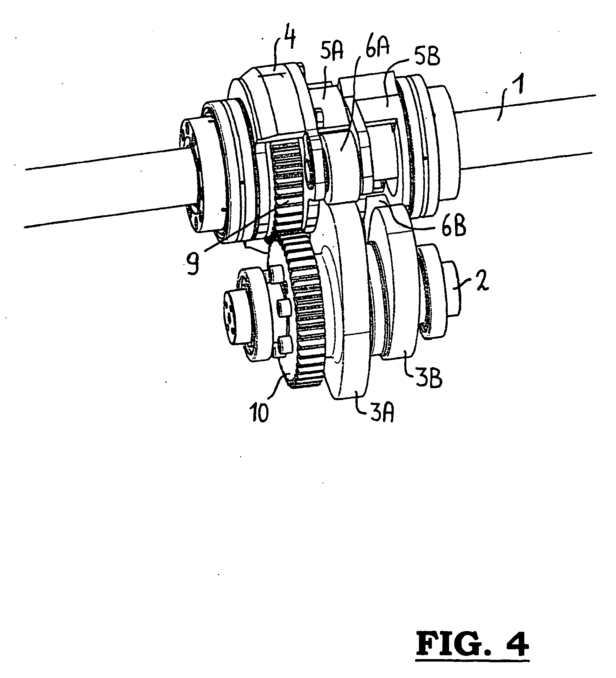

In a second embodiment of the driving device according to the present invention, represented in the figures 3 and 4, the lever arms (5A),(5B) with their respective traveller rollers (6A), (6B) are provided on the drive shaft (1) on the same side of the gear wheel (9) and also the cam discs (3A), (3B) are provided on the camshaft (2) on the same side of the gear wheel (10).

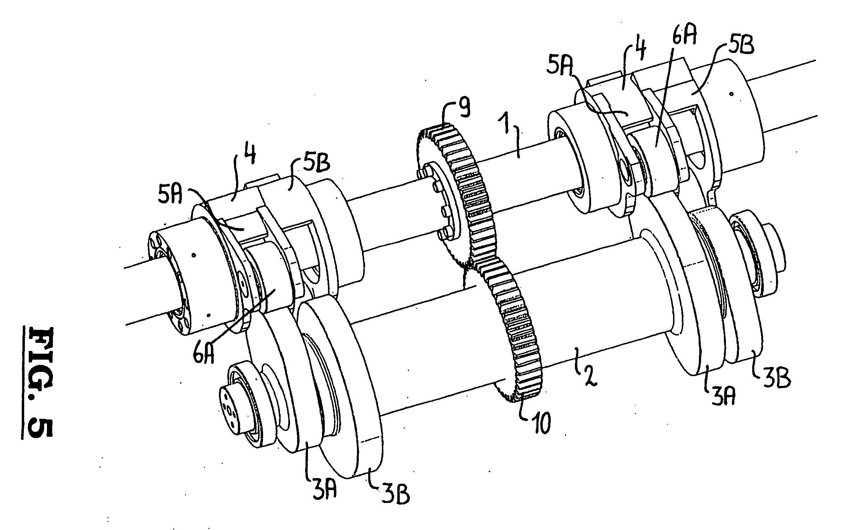

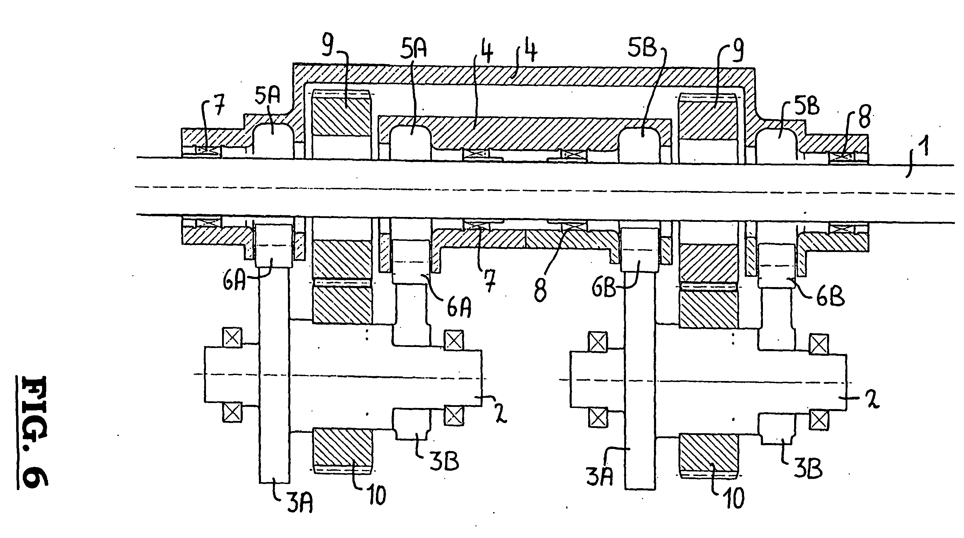

If two cam follower levers (4) are provided in the driving device, the device may be carried out according to figure 5 or figure 6. In the embodiment according to figure 5 (a third embodiment) the two cam follower levers (4) are mounted on the drive shaft (1) supported by bearings on either side of the gear wheel (9). Each cam follower lever (4) has two first lever arms (5A), (5B) operating in conjunction with a respective pair of conjugated cams (3A), (3B). These cam discs (3A), (3B) are provided on the same camshaft (2) on either side of a gear wheel (10). The rotation of the drive shaft (1) is transmitted to the camshaft (2) through the gear wheels (9), (10). Because of the rotating cam discs (3A), (3B), the cam follower levers (4) are driven to perform an alternating rotary motion. The cam follower levers (4) have one or several second lever arms (not represented in the figures) in order to transmit their motion to a part of the machine to be driven.

In the embodiment according to figure 6 (a fourth embodiment), the pairs of conjugated cam discs are provided on separate camshafts (2) on either side of the weaving machine. Respective gear wheels (10) are provided on these camshafts (2). On the drive shaft (1), two corresponding gear wheels (9) are provided, meshing with the gear wheels (10) of the respective camshafts (2). Furthermore, two cam follower levers (4) are likewise mounted on the drive shaft (1), by means of two bearings (7), (8). These cam follower levers (4) extend above one another across the width of the textile machine. Each cam follower lever (4) has a lever arm (5A), (5B) provided with a traveller roller (6A), (6B) on either side of the machine.

The two lever arms (5A), (5B) of the upper cam follower lever (4) are operating in conjunction with a cam (3A) of the left pair of cams (on the left side of the machine) and a cam (3B) of the right pair of cams (on the right side of the machine). Both cams (3A), (3B) are conjugated cams. The two lever arms (5A), (5B) of the lower cam follower lever (4) are operating in conjunction with a cam (3B) of the left pair of cams (on the left side of the machine) and a cam (3A) of the other pair of cams (on the right side of the machine). Both cams (3B), (3A) are likewise conjugated cams.

Each cam follower lever (4) is coaxially supported on the drive shaft (1) by means of two bearings (7), (8). The bearings (7), (8) of the upper cam follower lever (4) are mounted on the drive shaft (1), at the left of the left gear wheel (9) and at the right of the right gear wheel (9) respectively. The bearings (7), (8) of the lower cam follower lever (4) are mounted on the drive shaft (1) between the two gear wheels (9).

In the embodiment of figure 6, both cam follower levers (4) will be able to transmit their alternating rotary motion on both sides of the textile machine to an element to be driven by means of a second lever arm connected to it. Because of which two oscillating alternating motions may be realized on either side of the machine.

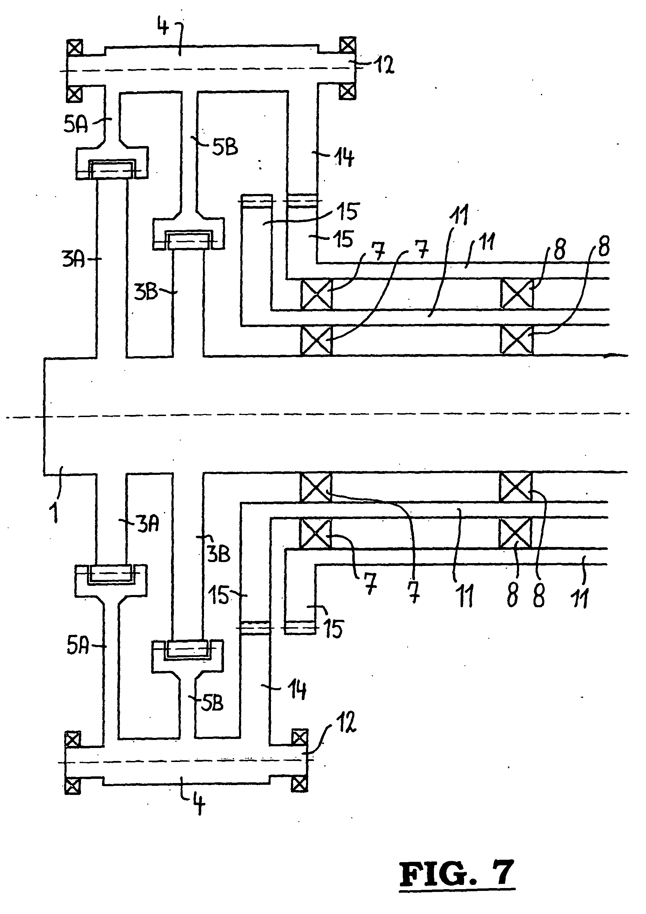

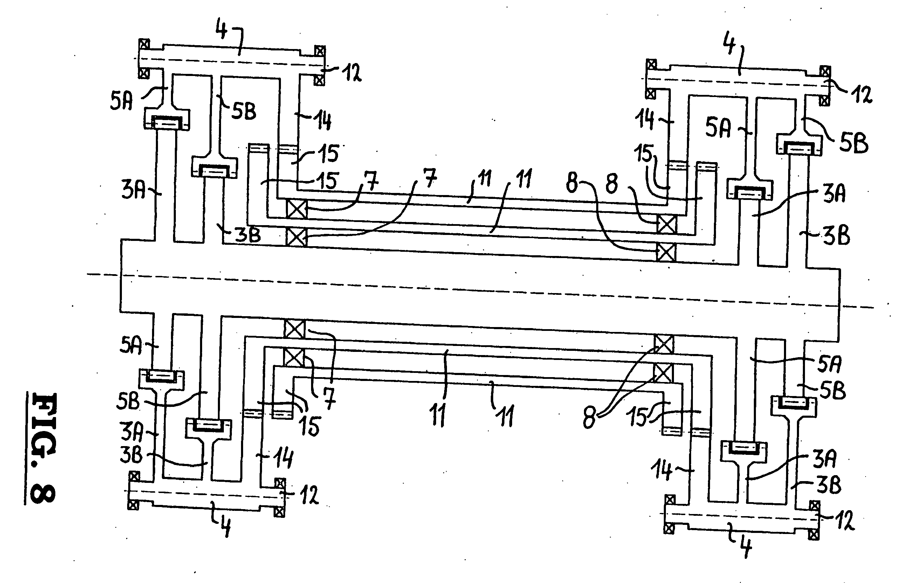

In the embodiment of figure 7, not the cam follower lever (4), but two other levers (11) driven by this cam follower lever are coaxially supported on bearings on the drive shaft (1). In this driving device, the cams (3A), (3B) are provided on the drive shaft (1). Two cam follower levers (4) with lever arms (5A), (5B) are each provided on a respective shaft (12) on either side of the drive shaft (1). These cam follower levers (4) are represented above and below the drive shaft (1) in figure 7. On each shaft (12) of these cam follower levers (4), each time a gear wheel (14) is provided, meshing with a gear wheel (15) that is provided on a respective lever (11). This lever (11) is coaxially supported on the drive shaft (1) by means of two bearings (7), (8). A first lever (11) operating in conjunction with the lower cam follower lever (4) is coaxially mounted on bearings on the drive shaft (1). A second lever (11) operating in conjunction with the upper cam follower lever (4) is likewise mounted on bearings on the drive shaft (1), around the first lever (11). In this embodiment, the advantages of the invention, mentioned above, are applying to the levers (11). In the embodiment according to figure 8, the levers (11) are driven on both sides.

Such a driving device with two cam follower levers (4) operating in conjunction at a dephasing angle of 180° with the same cams (3A), (3B), is suitable, for instance, for driving the blades of a Jacquard machine moving in opposition.

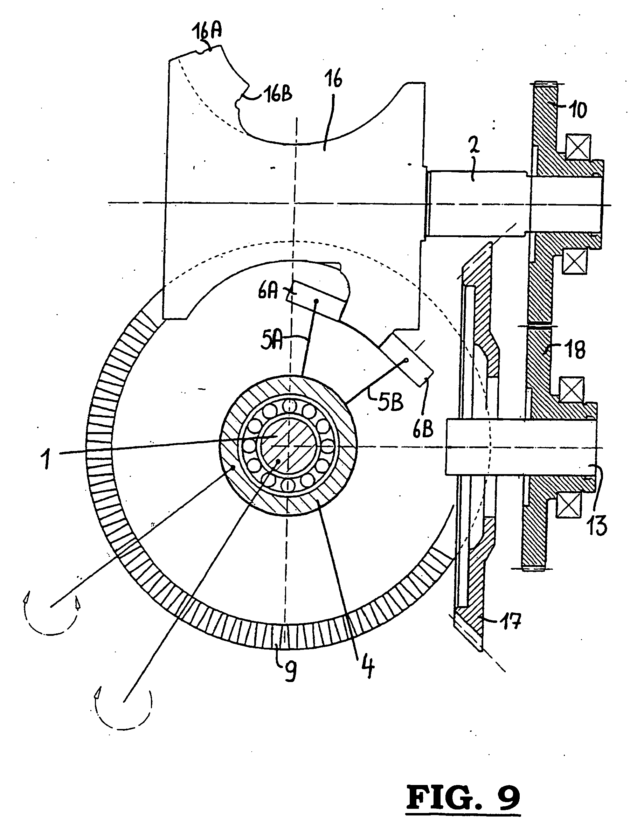

The cams (3A), (3B) on the camshaft (2) may be conjugated cams, eccentrics or single cam discs. With single cam discs, the lever arm is pushed against the cam disc by means of a spring. Also three-dimensional cams may be applied, such as, for instance, a globoidal cam (16), as represented in figure 9. The globoidal cam (16) represented in figure 9 has two running surfaces (16A), (16B) for the traveller rollers (6A), (6B) of the lever arms (5A), (5B) because such three-dimensional cams (16) are installed at right angles to the drive shaft (1) and are crossing this drive shaft (1), an supplementary shaft (13) is provided. On this supplementary shaft (13) a bevel gear (17) is provided, meshing with the gear wheel (9) on the drive haft (1), as well as a gear wheel (18) meshing with the gear wheel (10) on the camshaft (2).

## Claims

1. Driving device, comprising at least one body (4), (11) which is provided to be put in an alternating rotary motion by the rotation of at least one cam (3A), (3B); (16A), (16B), **characterized in that** said body (4), (11) is rotatable on a shaft (1), which itself is provided to perform a continuous rotary motion.

2. Driving device according to claim 1, **characterized in that** it comprises a drive shaft (1) in order to rotate the cam (3A), (3B); (16A), (16B), and **in that** said body (4), (11) is mounted on bearings on the drive shaft (1) or on a shaft that may be driven by said drive shaft (1).

3. Driving device according to any one of the preceding claims, **characterized in that** the body (4), (11) comprises two first lever arms (5A), (5B) provided to operate in conjunction with a respective cam (3A), (3B); (16A), (16B) of a pair of conjugated cams in order to put the body (4), (11) in an alternating rotary motion.

4. Driving device according to any one of the preceding claims, **characterized in that** the body (9), (11) comprises at least one second lever arm in order to transmit the alternating rotary motion to a part to be driven.

5. Driving device according to any one of the preceding claims, **characterized in that** it comprises transmission means (9), (10) to transmit the motion from said shaft (1) to said cam (3A), (3B); (16A), (16B).

6. Driving device according to claim 5, **characterized in that** a transmission means (9) is provided on said shaft (1), **in that** the body (4) comprises two first lever arms (5A), (5B), provided to operate in conjunction with a respective cam (3A), (3B) of a pair of conjugated cams (3A), (3B) and **in that** the body (4) is carried out such that a first lever arm (5A), (5B) will be situated on either side of said transmission means (9).

7. Driving device according to claim 5 or 6, **characterized in that** a transmission means (9) is provided on said shaft (1), and **in that** the body (4) is provided to be rotatable on the drive shaft (1) by means of two bearings (7), (8) provided on the drive shaft on either side of the transmission means (9).

8. Driving device according to any one of the preceding claims, **characterized in that** this device is comprising at least two bodies (4) and **in that** the cams (3A), (3B); (16A), (16B) operating in conjunction with these bodies (4), are provided on one and the same shaft (2).

9. Driving device according to claim 5 and 8, **characterized in that** a transmission means (9) is provided on said shaft (1), and **in that** a body (4) is provided on said shaft (1) on either side of the transmission means (9).

10. Driving device according to any one of the preceding claims, **characterized in that** this device comprises at least two bodies (4) and **in that** the cams (3A), (3B); (16A), (16B) operating in conjunction with these bodies (4) are provided on different shafts (2).

11. Driving device according to claim 10, **characterized in that** it comprises additional cam systems on respective shafts (2), at a distance from one another, according to the longitudinal direction of the drive shaft (1), and **in that** the device comprises at least two bodies (4) that may be put in an alternating rotary motion by a cam (3A) of the one cam system and by a conjugated cam of the other cam system.

12. Driving device according to any one of the preceding claims, **characterized in that** said body (4) is a cam follower lever or a lever (11) driven by the cam follower lever.

13. Driving device according to any one of the preceding claims, **characterized in that** said cam (3A), (3B); (16A), (16B) is a cam disc or a three-dimensional cam (16).

14. Machine comprising a driving device at least one rotatable body (4), (11) of which is provided to be put in an alternating rotary motion by at least one cam (3A), (3B); (16A), (16B) in order to drive a machine part which is connected to said body (4), (11), **characterized in that** said body (4), (11) is rotatable on a shaft (1), which itself is provided to perform a continuous rotary motion.

15. Machine according to claim 14, **characterized in that** it comprises a drive shaft (1) in order to rotate the cam (3A), (3B); (16A), (16B), and **in that** said body (4), (11) is mounted on bearings on said drive shaft (1) or on a shaft that may be driven by said drive shaft (1).

16. Machine according to claim 14 or 15, **characterized in that** it comprises a device according to anyone of the claims 1 to 13.

17. Machine according to any one of the claims 14 to 16, **characterized in that** it is a textile machine, such as, for instance, a weaving machine or a Jacquard machine or a knitting machine.

## Patentansprüche

1. Antriebsvorrichtung, umfassend wenigstens einen Körper (4), (11), welcher dazu vorgesehen ist, vermittels der Rotation wenigstens eines Nockens (3A), (3B); (16A), (16B) in eine alternierende Rotationsbewegung versetzt zu werden,
**dadurch gekennzeichnet, dass** der Körper (4), (11) an einer Welle (1) drehbar ist, welche selbst dazu vorgesehen ist, eine kontinuierliche Drehbewegung durchzuführen.

2. Antriebsvorrichtung nach Anspruch 1,
**dadurch gekennzeichnet, dass** sie eine Antriebswelle (1) umfasst, um den Nocken (3A), (3B); (16A), (16B) zu drehen, und dass der Körper (4), (11) an Lagern an der Antriebswelle (1) oder an einer Welle, die durch die Antriebswelle (1) angetrieben werden kann, angebracht ist.

3. Antriebsvorrichtung nach irgendeinem der vorangehenden Ansprüche,
**dadurch gekennzeichnet, dass** der Körper (4), (11) wenigstens zwei erste Hebelarme (5A), (5B) umfasst, welche dazu vorgesehen sind, in Verbindung mit einem jeweiligen Nocken (3A), (3B); (16A), (16B) eines Paars konjugierter Nocken zu wirken, um den Körper (4), (11) in eine alternierende Drehbewegung zu versetzen.

4. Antriebsvorrichtung nach irgendeinem der vorangehenden Ansprüche,
**dadurch gekennzeichnet, dass** der Körper (4), (11) wenigstens einen zweiten Hebelarm umfasst, um die alternierende Drehbewegung auf ein anzutreibendes Teil zu übertragen.

5. Antriebsvorrichtung nach irgendeinem der vorangehenden Ansprüche,
**dadurch gekennzeichnet, dass** sie ein Übertragungsmittel (9), (10) umfasst, um die Bewegung von der Welle (1) auf den Nocken (3A), (3B) ; (16A), (16B) zu übertragen.

6. Antriebsvorrichtung nach Anspruch 5,
**dadurch gekennzeichnet, dass** ein Antriebsmittel (9) an der Welle (1) vorgesehen ist, dass der Körper (4) zwei erste Hebelarme (5A), (5B) umfasst, vorgesehen, um in Verbindung mit einem jeweiligen Nocken (3A), (3B) eines Paars konjugierter Nocken (3A), (3B) zu wirken, und dass der Körper (4) derart ausgeführt ist, dass ein erster Hebelarm (5A), (5B) an jeder Seite des Übertragungsmittels (9) angeordnet sein wird.

7. Antriebsvorrichtung nach Anspruch 5 oder 6,
**dadurch gekennzeichnet, dass** ein Übertragungsmittel (9) an der Welle (1) vorgesehen ist und dass der Körper (4) vermittels zweier an der Antriebswelle an jeder Seite des Übertragungsmittels (9) vorgesehener Lager (7), (8) an der Antriebswelle (1) drehbar vorgesehen ist.

8. Antriebsvorrichtung nach irgendeinem der vorangehenden Ansprüche,
**dadurch gekennzeichnet, dass** diese Vorrichtung wenigstens zwei Körper (4) umfasst und dass die Nocken (3A), (3B); (16A), (16B), die in Verbindung mit diesen Körpern (4) wirken, an ein- und derselben Welle (2) vorgesehen sind.

9. Antriebsvorrichtung nach Anspruch 5 und 8,
**dadurch gekennzeichnet, dass** ein Übertragungsmittel (9) an der Welle (1) vorgesehen ist und dass ein Körper (4) an der Welle (1) an jeder Seite des Übertragungsmittels (9) vorgesehen ist.

10. Antriebsvorrichtung nach irgendeinem der vorangehenden Ansprüche,
**dadurch gekennzeichnet, dass** diese Vorrichtung wenigstens zwei Körper (4) umfasst und dass die Nocken (3A), (3B); (16A), (16B), welche in Verbindung mit diesen Körpern (4) wirken, an verschiedenen Wellen (2) vorgesehen sind.

11. Antriebsvorrichtung nach Anspruch 10,
**dadurch gekennzeichnet, dass** sie zusätzliche Nockensysteme an jeweiligen Wellen (2) mit Abstand zueinander entsprechend der Längsrichtung der Antriebswelle (1) umfasst und dass die Vorrichtung wenigstens zwei Körper (4) umfasst, die vermittels eines Nockens (3A) des einen Nockensystems und vermittels eines konjugierten Nockens des anderen Nockensystems in eine alternierende Drehbewegung versetzt werden können.

12. Antriebsvorrichtung nach irgendeinem der vorangehenden Ansprüche,
**dadurch gekennzeichnet, dass** der Körper (4) ein Nockenfolgerhebel oder ein durch den Nockenfolgerhebel angetriebener Hebel (11) ist.

13. Antriebsvorrichtung nach irgendeinem der vorangehenden Ansprüche,
**dadurch gekennzeichnet, dass** der Nocken (3A), (3B); (16A), (16B) eine Nockenscheibe oder ein dreidimensionaler Nocken (16) ist.

14. Maschine, umfassend eine Antriebsvorrichtung, von welcher wenigstens ein drehbarer Körper (4), (11) dazu vorgesehen ist, vermittels wenigstens eines Nockens (3A), (3B); (16A), (16B) in eine alternierende Drehbewegung versetzt zu werden, um ein Maschinenteil anzutreiben, welches mit dem Körper (4), (11) verbunden ist,
**dadurch gekennzeichnet, dass** der Körper (4), (11) an einer Welle (1) drehbar ist, welche selbst zum Durchführen einer kontinuierlichen Drehbewegung vorgesehen ist.

15. Maschine nach Anspruch 14,
**dadurch gekennzeichnet, dass** sie eine Antriebswelle (1) umfasst, um den Nocken (3A), (3B); (16A), (16B) zu drehen, und dass der Körper (4), (11) an Lagern an der Antriebswelle (1) oder an einer Welle, die durch die Antriebswelle (1) angetrieben werden kann, angebracht ist.

16. Maschine nach Anspruch 14 oder 15,
**dadurch gekennzeichnet, dass** sie eine Vorrichtung nach irgendeinem der Ansprüche 1 bis 13 umfasst.

17. Maschine nach irgendeinem der Ansprüche 14 bis 16,
**dadurch gekennzeichnet, dass** sie eine Textilmaschine ist, wie z.B. eine Webmaschine oder eine Jacquardmaschine oder eine Strickmaschine.

## Revendications

1. Dispositif d'entraînement, comprenant au moins un corps (4), (11) qui est conçu pour être entraîné dans un mouvement de rotation alternatif par la rotation d'au moins une came (3A), (3B); (16A), (16B), **caractérisé en ce que** ledit corps (4), (11) peut tourner sur un arbre (1) qui est lui-même conçu pour exécuter un mouvement de rotation continu.

2. Dispositif d'entraînement selon la revendication 1, **caractérisé en ce qu'**il comprend un arbre d'entraînement (1) destiné à faire tourner la came (3A), (3B); (16A), (16B), et **en ce que** ledit corps (4), (11) est monté sur des paliers sur l'arbre d'entraînement (1), ou sur un arbre qui peut être entraîné par ledit arbre d'entraînement (1).

3. Dispositif d'entraînement selon l'une quelconque des revendications précédentes, **caractérisé en ce que** le corps (4), (11) comprend deux premiers bras de levier (5A), (5B) qui sont prévus pour opérer en conjonction avec une came respective (3A), (3B); (16A), (16B) d'une paire de cames conjuguées dans le but d'entraîner le corps (4), (11) dans un mouvement de rotation alternatif.

4. Dispositif d'entraînement selon l'une quelconque des revendications précédentes, **caractérisé en ce que** le corps (4), (11) comprend au moins un deuxième bras de levier qui sert à transmettre le mouvement de rotation alternatif à une pièce à entraîner.

5. Dispositif d'entraînement selon l'une quelconque des revendications précédentes, **caractérisé en ce qu'**il comprend des moyens de transmission (9), (10) pour transmettre le mouvement dudit arbre (1) à ladite came (3A), (3B); (16A), (16B).

6. Dispositif d'entraînement selon la revendication 5, **caractérisé en ce qu'**un moyen de transmission (9) est prévu sur ledit arbre (1), **en ce que** le corps (4) comprend deux premiers bras de levier (5A), (5B) qui sont prévus pour opérer en conjonction avec une came respective (3A), (3B) d'une paire de cames conjuguées (3A), (3B), et **en ce que** le corps (4) est conçu de telle sorte qu'un premier bras de levier (5A), (5B) soit situé de part et d'autre dudit moyen de transmission (9).

7. Dispositif d'entraînement selon la revendication 5 ou 6, **caractérisé en ce qu'**un moyen de transmission (9) est prévu sur ledit arbre (1), et **en ce que** le corps (4) est conçu de manière à pouvoir tourner sur l'arbre d'entraînement (1) au moyen de deux paliers (7), (8) qui sont prévus sur l'arbre d'entraînement de part et d'autre du moyen de transmission (9).

8. Dispositif d'entraînement selon l'une quelconque des revendications précédentes, **caractérisé en ce que** ce dispositif comprend au moins deux corps (4), et **en ce que** les cames (3A), (3B); (16A), (16B) qui opèrent en conjonction avec ces corps (4) sont disposées sur un seul et même arbre (2).

9. Dispositif d'entraînement selon la revendication 5 et 8, **caractérisé en ce qu'**un moyen de transmission (9) est prévu sur ledit arbre (1), et **en ce qu'**un corps (4) est prévu sur ledit arbre (1) de part et d'autre du moyen de transmission (9).

10. Dispositif d'entraînement selon l'une quelconque des revendications précédentes, **caractérisé en ce que** ce dispositif comprend au moins deux corps (4), et **en ce que** les cames (3A), (3B); (16A), (16B) qui opèrent en conjonction avec ces corps (4), sont disposées sur des arbres différents (2).

11. Dispositif d'entraînement selon la revendication 10, **caractérisé en ce qu'**il comprend des systèmes de cames supplémentaires sur des arbres respectifs (2), à une distance les uns des autres, selon la direction longitudinale de l'arbre d'entraînement (1), et **en ce que** le dispositif comprend au moins deux corps (4) qui peuvent être entraînés dans un mouvement de rotation alternatif par une came (3A) du premier système de cames et par une came conjuguée de l'autre système de cames.

12. Dispositif d'entraînement selon l'une quelconque des revendications précédentes, **caractérisé en ce que** ledit corps (4) est un suiveur de came, ou un levier (11) qui est entraîné par le suiveur de came.

13. Dispositif d'entraînement selon l'une quelconque des revendications précédentes, **caractérisé en ce que** ladite came (3A), (3B); (16A), (16B) est un disque à cames ou une came tridimensionnelle (16).

14. Machine comprenant un dispositif d'entraînement comprenant au moins un corps rotatif (4), (11) qui est prévu pour être entraîné dans un mouvement de rotation alternatif par au moins une came (3A), (3B); (16A), (16B) dans le but d'entraîner une partie de machine qui est connectée audit corps (4), (11), **caractérisée en ce que** ledit corps (4), (11) peut tourner sur un arbre (1) qui est lui-même conçu pour exécuter un mouvement de rotation continu.

15. Machine selon la revendication 14, **caractérisée en ce qu'**elle comprend un arbre d'entraînement (1) destiné à faire tourner la came (3A), (3B); (16A), (16B), et **en ce que** ledit corps (4), (11) est monté sur des paliers sur ledit arbre d'entraînement (1) ou sur un arbre qui peut être entraîné par ledit arbre d'entraînement (1).

16. Machine selon la revendication 14 ou 15, **caractérisée en ce qu'**elle comprend un dispositif selon l'une quelconque des revendications 1 à 13.

17. Machine selon l'une quelconque des revendications 14 à 16, **caractérisée en ce qu'**il s'agit d'une machine textile, telle que, par exemple, un métier à tisser, une mécanique Jacquard ou une machine à tricoter.
